(19)

Europäisches
Patentamt
European
Patent Office
Office européen
des brevets

(11) **EP 4 299 665 A1**

(12) **EUROPEAN PATENT APPLICATION**
published in accordance with Art. 153(4) EPC

(43) Date of publication:
**03.01.2024 Bulletin 2024/01**

(21) Application number: **22759796.0**

(22) Date of filing: **25.02.2022**

(51) International Patent Classification (IPC):
*C08L 23/10* (2006.01)          *C08J 9/16* (2006.01)
*C08J 9/232* (2006.01)          *C08K 3/01* (2018.01)
*C08K 3/04* (2006.01)          *B29C 48/04* (2019.01)

(52) Cooperative Patent Classification (CPC):
**B29C 48/04; C08J 9/16; C08J 9/232; C08K 3/01;
C08K 3/04; C08L 23/10**

(86) International application number:
**PCT/JP2022/007863**

(87) International publication number:
**WO 2022/181762 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021 JP 2021029192**

(71) Applicants:
• **Kaneka Corporation
Osaka-shi, Osaka 530-8288 (JP)**

• **Kaneka Belgium N.V.
2260 Westerlo-Oevel (BE)**

(72) Inventors:
• **NAKAYAMA, Kiyotaka
Settsu-shi, Osaka 566-0072 (JP)**
• **LAEVEREN, Nancy
2260 Westerlo-Oevel (BE)**

(74) Representative: **Vossius & Partner
Patentanwälte Rechtsanwälte mbB
Siebertstraße 3
81675 München (DE)**

(54) **POLYPROPYLENE RESIN EXTRUDED FOAM PARTICLES AND POLYPROPYLENE RESIN FOAM MOLDED BODY**

(57)     Provided are polypropylene-based resin extruded expanded particles having excellent moldability and a polypropylene-based resin foamed molded product having excellent resistance to breakage. The polypropylene-based resin extruded expanded particles are obtained by expanding a base resin, the base resin containing, in specific amounts, a polypropylene-based resin having a branched structure having a specific configuration, a thermoplastic elastomer, and an inorganic coloring agent.

EP 4 299 665 A1

**Description**

Technical Field

The present invention relates to polypropylene-based resin extruded expanded particles and a polypropylene-based resin foamed molded product.

Background Art

Polypropylene-based resin foamed molded products obtained with use of polypropylene-based resin expanded particles have the characteristics of, for example, capability of being formed in any shape, shock-absorbing properties, lightweight properties, and heat insulating properties, which are advantages of foamed molded products.

Examples of a method of producing polypropylene-based resin expanded particles include a batch foaming method which is a discontinuous process, and an extrusion foaming method which is a continuous process. The extrusion foaming method has many advantages in terms of, for example, efficiency and environment.

Examples of a technique for obtaining polypropylene-based resin expanded particles by an extrusion foaming method include techniques disclosed in Patent Literatures 1 and 2.

Patent Literature 1 discloses polypropylene-based resin pre-expanded particles that are formed of a polypropylene-based resin in which a loss tangent and a melt fracture take-up speed satisfy a specific relational formula.

Patent Literature 2 discloses a method of producing a modified polypropylene resin, the method including a melting and kneading step of melting and kneading a mixture of (a) a random polypropylene resin having a particular structure, (b) a conjugated diene compound, and (c) a radical polymerization initiator having a particular structure to obtain a modified polypropylene resin.

Citation List

[Patent Literature]

[Patent Literature 1]
PCT International Publication No. WO 2018/016399
[Patent Literature 2]
PCT International Publication No. WO 2020/004429

Summary of Invention

Technical Problem

However, the conventional techniques as described above are not sufficient in terms of moldability of polypropylene-based resin extruded expanded particles and resistance of a polypropylene-based resin foamed molded product to breakage, and there is room for further improvement.

An embodiment of the present invention has been made in view of the above problem, and an object thereof is to provide polypropylene-based resin extruded expanded particles having excellent moldability and a polypropylene-based resin foamed molded product having excellent resistance to breakage.

Solution to Problem

That is, polypropylene-based resin extruded expanded particles in accordance with an embodiment of the present invention include a base resin containing a polypropylene-based resin having a branched structure, wherein the polypropylene-based resin having a branched structure has a melt tension of 5 cN to 50 cN, and the base resin further contains a thermoplastic elastomer and an inorganic coloring agent.

Advantageous Effects of Invention

An embodiment of the present invention brings about the effect of making it possible to provide polypropylene-based resin extruded expanded particles having excellent moldability and a polypropylene-based resin foamed molded product having excellent resistance to breakage.

Description of Embodiments

The following description will discuss embodiments of the present invention. The present invention is not, however, limited to these embodiments. The present invention is not limited to the features described below, but may be altered in various ways within the scope of the claims. The present invention also encompasses, in its technical scope, any embodiment or example derived by combining technical means disclosed in differing embodiments or examples. Furthermore, it is possible to form a new technical feature by combining technical means disclosed in differing embodiments. All academic and patent documents cited in the present specification are incorporated herein by reference. Any numerical range expressed as "A to B" in the present specification means "not less than A and not more than B (i.e., a range from A to B which includes both A and B)" unless otherwise stated.

A copolymer containing, as structural units, a structural unit derived from an $X^1$ monomer, a structural unit derived from an $X^2$ monomer, ... , and an $X^n$ monomer (n is an integer of not less than 3) is also referred to as an "$X^1/X^2/$ ... $/X^n$ copolymer" unless otherwise specified herein. Such an $X^1/X^2/$ ... $/X^n$ copolymer is not limited to any particular polymerization form unless otherwise explicitly stated, but may be a random copolymer, a block copolymer, or a graft copolymer.

[1. Technical idea of embodiment of the present invention]

In a case where polypropylene-based resin extruded expanded particles are produced by an extrusion foaming method, it is necessary to expand a completely melted resin composition. Thus, in a case where polypropylene-based resin extruded expanded particles are produced by the extrusion foaming method with use of a linear polypropylene-based resin having no branched structure, a resin composition cannot endure expandability due to its low viscosity during expansion, so that a cell can be broken. Since resulting extruded expanded particles have a high open cell ratio, the extruded expanded particles may shrink during molding, and it may be impossible to obtain a foamed molded product having a good quality. As a technique for solving this problem, there has been proposed a polypropylene resin in which a crosslinked structure is introduced, as described in Patent Literatures 1 and 2.

However, the inventors of the present invention found, through their own study, that, in a case where extruded expanded particles obtained with use of a polypropylene resin having a branched structure have been subjected to in-mold foam molding, a resulting foamed molded product tends to fracture due to a slight deformation thereof caused, for example, on impact. With regard to a foamed molded product obtained from extruded expanded particles which were obtained by extruding and expanding a polypropylene resin having a branched structure, the tendency of such a foamed molded product to fracture due to a deformation was noticeable particularly in a foamed molded product having a low expansion ratio obtained with use of extruded expanded particles having a low expansion ratio. The reason for these is uncertain, but the inventors of the present invention surmised as follows: Molecular chains of the resin in the foamed molded product have many crosslinked portions (also described as "branches"). When the foamed molded product is stretched, the crosslinked portions (branches) become entangled and can act to prevent the foamed molded product from being stretched any further. It is also considered that, since the crosslinked portions (branches) are entangled and not stretched, the molecular chains have no choice but to break. That is, the inventors of the present invention surmised that the above-described reason is that the flexibility of the foamed molded product decreases, the foamed molded product becomes difficult to stretch, and specifically, the foamed molded product tends to have a lowered tensile elongation at break.

That is, the above-described techniques described in Patent Literatures 1 and 2 have room for further improvement from the viewpoint of resistance of the foamed molded product to breakage.

In view of the above, the inventors of the present invention conducted diligent studies in order to provide extruded expanded particles capable of providing a foamed molded product having excellent resistance to breakage. As a result, surprisingly, the inventors of the present invention found, through their own study, the following novel finding: A combined use of a polypropylene-based resin having a branched structure and a linear polypropylene-based resin having no branched structure makes it possible to provide extruded expanded particles capable of providing a foamed molded product having excellent resistance to breakage.

Incidentally, there are cases where a colored foamed molded product is required for the reasons, for example, that there is a suitable color (color) depending on the application for which the foamed molded product is used, that dirt on the surface of the foamed molded product is made less conspicuous, and that resistance to light is imparted to the foamed molded product. The inventors of the present invention attempted to (i) obtain colored extruded expanded particles with use of an inorganic coloring agent and with a combined use of a polypropylene-based resin having a branched structure and a linear polypropylene-based resin having no branched structure and (ii) further obtain a colored foamed molded product from the colored extruded expanded particles. As a result, surprisingly, the inventors of the present invention found, through their own study, that (a) the colored extruded expanded particles obtained in this way have a significantly narrow molding range for obtaining a conforming item of a foamed molded product, and (b) the colored foamed molded product barely obtained has a significantly low resistance to breakage.

In view of the above, the inventors of the present invention conducted further diligent studies in order to provide both polypropylene-based resin extruded expanded particles having excellent moldability and a polypropylene-based resin foamed molded product having excellent resistance to breakage. As a result, surprisingly, the inventors of the present invention completed the present invention by finding, through their own study, the following novel finding: Even in a case where an inorganic coloring agent is used, a combined use of a polypropylene-based resin having a branched structure and a thermoplastic elastomer makes it possible to provide both (a) polypropylene-based resin extruded expanded particles having excellent moldability and (b) a polypropylene-based resin foamed molded product having excellent resistance to breakage.

[2. Polypropylene-based resin extruded expanded particles]

Polypropylene-based resin extruded expanded particles in accordance with an embodiment of the present invention include a base resin containing a polypropylene-based resin having a branched structure, wherein the polypropylene-based resin having a branched structure has a melt tension of 5 cN to 50 cN, and the base resin further contains a thermoplastic elastomer and an inorganic coloring agent.

The polypropylene-based resin extruded expanded particles can be formed into a polypropylene-based resin foamed molded product by molding (e.g., in-mold foam molding) of the polypropylene-based resin extruded expanded particles. In the present specification, the "polypropylene-based resin extruded expanded particles" may be referred to as "extruded expanded particles", and the "polypropylene-based resin extruded expanded particles in accordance with an embodiment of the present invention" may be referred to as the "present extruded expanded particles". The "polypropylene-based resin foamed molded product" may be referred to as a "foamed molded product", and the "polypropylene-based resin foamed molded product in accordance with an embodiment of the present invention" may be referred to as the "present foamed molded product".

The present extruded expanded particles that have the above-described features have (a) an advantage that the present extruded expanded particles have excellent moldability and (b) an advantage that the present extruded expanded particles are capable of providing a foamed molded product having excellent resistance to breakage. Note that, in the present specification, moldability of the present extruded expanded particles is evaluated on the basis of the molding range of the present extruded expanded particles. The molding range will be described later. In the present specification, the resistance of the present foamed molded product to breakage is evaluated on the basis of the tensile elongation at break of the present foamed molded product. The tensile elongation at break will be described later.

(2-1. Base resin)

The base resin includes (a) a polypropylene-based resin having a branched structure, (b) a thermoplastic elastomer, and an inorganic coloring agent. The base resin can further optionally include an additive such as a cell nucleating agent.

In the present specification, the "polypropylene-based resin having a branched structure" is intended to mean (a) a polypropylene-based resin in which molecules of a polypropylene-based resin in which a branched structure is not introduced are partially intermolecularly crosslinked with each other and (b) a polypropylene-based resin in which, as a branched chain, a diene compound or the like other than (poly)propylene is introduced in a polypropylene-based resin in which a branched structure is not introduced. In the present specification, the "polypropylene-based resin in which a branched structure is not introduced" may be referred to as a "linear polypropylene-based resin", the "polypropylene-based resin having a branched structure" may be referred to as a "branched polypropylene-based resin", and the "linear polypropylene-based resin" and the "branched polypropylene-based resin" may be collectively referred to as a "polypropylene-based resin". The linear polypropylene-based resin can also be described as a raw material for a branched polypropylene-based resin.

In the present specification, a polypropylene-based resin is intended to mean a resin that contains structural units derived from a propylene monomer in a proportion of not less than 50 mol% with respect to 100 mol% of all structural units contained in the resin. In the present specification, the "structural units derived from a propylene monomer" may be referred to as "propylene units".

(Linear polypropylene-based resin)

The linear polypropylene-based resin may be (a) a homopolymer of propylene, (b) a block copolymer or a random copolymer that is a copolymer of propylene and a monomer(s) other than propylene, or (c) a mixture of at least two thereof.

The linear polypropylene-based resin may have, in addition to the propylene units, one or more units of structural units derived from a monomer(s) other than a propylene monomer or may have one or more types of such structural units. The "monomer(s) other than a propylene monomer" used in producing the linear polypropylene-based resin may be referred to as a "comonomer(s)". The "structural units derived from a monomer(s) other than a propylene monomer" included in the linear polypropylene-based resin may be referred to as "comonomer units".

Examples of the comonomer(s) include monomers such as: (a) $\alpha$-olefin having 2 or 4 to 12 carbon atoms, such as ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and 1-decene; (b) cyclic olefin such as cyclopentene, norbornene, and tetracyclo[6,2,11,8,13,6]-4-dodecene; (c) diene such as 5-methylene-2-norbornene, 5-ethylidene-2-norbornene, 1,4-hexadiene, methyl-1,4-hexadiene, and 7-methyl-1,6-octadiene; and (d) vinyl-based monomers such as vinyl chloride, vinylidene chloride, acrylonitrile, methacrylonitrile, vinyl acetate, acrylic acid, acrylic esters, methacrylic acid, methacrylic esters, maleic acid, maleic anhydride, styrene-based monomers, vinyltoluene, and divinylbenzene.

Examples of the acrylic esters include methyl acrylate, ethyl acrylate, butyl acrylate, hexyl acrylate, 2-ethylhexyl acrylate, lauryl acrylate, stearyl acrylate, 2-hydroxyethyl acrylate, 2-hydroxypropyl acrylate, and glycidyl acrylate.

Examples of the methacrylic esters include methyl methacrylate, ethyl methacrylate, butyl methacrylate, hexyl methacrylate, 2-ethylhexyl methacrylate, lauryl methacrylate, stearyl methacrylate, 2-hydroxyethyl methacrylate, 2-hydroxypropyl methacrylate, and glycidyl methacrylate.

Examples of the styrene-based monomers include styrene, methylstyrene, dimethylstyrene, alpha methylstyrene, paramethylstyrene, ethylstyrene, diethylstyrene, isopropylstyrene, t-butylstyrene, bromostyrene, dibromostyrene, tribromostyrene, chlorostyrene, dichlorostyrene, and trichlorostyrene.

The linear polypropylene-based resin has, as the comonomer unit(s), preferably a structural unit(s) derived from $\alpha$-olefin having 2 or 4 to 12 carbon atoms, more preferably a structural unit(s) derived from ethylene, 1-butene, isobutene, 1-pentene, 3-methyl-1-butene, 1-hexene, 4-methyl-1-pentene, 3,4-dimethyl-1-butene, 1-heptene, 3-methyl-1-hexene, 1-octene, and/or 1-decene, more preferably a structural unit(s) derived from ethylene, 1-butene, isobutene, 1-pentene, 3-methyl-1-butene, 1-hexene, and/or 4-methyl-1-pentene, even more preferably a structural unit(s) derived from ethylene, 1-butene, isobutene, and/or 1-pentene, and particularly preferably a structural unit(s) derived from ethylene and/or 1-butene. This feature provides (a) an advantage that a branched polypropylene-based resin having a high melt tension and a low gel fraction is obtained and (b) an advantage that the obtained branched polypropylene-based resin is capable of providing polypropylene-based resin extruded expanded particles having excellent moldability.

The linear polypropylene-based resin is preferably a propylene homopolymer, a polypropylene-based block copolymer, and/or a polypropylene-based random copolymer, and more preferably a propylene homopolymer and/or a polypropylene-based random copolymer. This feature provides (a) an advantage that a branched polypropylene-based resin having a high melt tension and a low gel fraction is obtained and (b) an advantage that the obtained branched polypropylene-based resin is capable of providing polypropylene-based resin extruded expanded particles having excellent moldability.

The linear polypropylene-based resin contains the propylene units in a proportion of preferably not less than 90 mol%, more preferably not less than 93 mol%, even more preferably not less than 95 mol%, and particularly preferably not less than 97 mol%, with respect to 100 mol% of all structural units contained in the linear polypropylene-based resin. This feature provides the advantage that a branched polypropylene-based resin having a high melt tension and a low gel fraction is obtained.

The melting point of the linear polypropylene-based resin is not particularly limited. The melting point of the linear polypropylene-based resin is, for example, preferably 130°C to 165°C, more preferably 135°C to 164°C, even more preferably 138°C to 163°C, and particularly preferably 140°C to 162°C. The linear polypropylene-based resin that has a melting point in the above-described range provides (a) an advantage that resulting extruded expanded particles have excellent moldability and (b) an advantage that the resulting extruded expanded particles are capable of providing a foamed molded product having excellent resistance to breakage. (a) The linear polypropylene-based resin that has a melting point of not lower than 130°C provides an advantage that: there is no possibility of a decrease in dimensional stability of the foamed molded product; there is no possibility of the foamed molded product having insufficient heat resistance; and the foamed molded product tends to have a higher compressive strength. (b) The linear polypropylene-based resin that has a melting point of not higher than 165°C, which makes it possible to mold the extruded expanded particles at a relatively low steam pressure, provides an advantage of making it possible to mold the extruded expanded particles with use of a general-purpose molding machine for polypropylene-based resin expanded particles.

In the present specification, the melting point of the linear polypropylene-based resin is a value determined by carrying out measurement by a differential scanning calorimetry (hereinafter referred to as "DSC method"). A specific operational procedure (measurement method) is as follows: (1) the temperature of 5 mg to 6 mg of the linear polypropylene-based resin is increased from 40°C to 220°C at a temperature increase rate of 10°C/minute so that the linear polypropylene-based resin is melted; (2) thereafter, the temperature of the linear polypropylene-based resin melted is decreased from 220°C to 40°C at a temperature decrease rate of 10°C/min so that the linear polypropylene-based resin is crystallized; and (3) thereafter, the temperature of the linear polypropylene-based resin crystallized is further increased from 40°C to 220°C at a temperature increase rate of 10°C/min. It is possible to determine, as the melting point of the linear polypropylene-based resin, a temperature at a peak (melting peak) in a DSC curve of the linear polypropylene-based resin which DSC curve is obtained in the second temperature increase (i.e., in (3)). Note that, in a case where as a result of carrying out the above-described method, a plurality of peaks (melting peaks) are present in the DSC curve of the linear polypropylene-based resin, the DSC curve being obtained in the second temperature increase, a temperature at a peak (melting peak) having the greatest melting heat quantity is defined as the melting point of the linear polypropylene-based resin. As a differential scanning calorimeter, it is possible to use, for example, a differential scanning calorimeter of a DSC6200 type available from Seiko Instruments Inc.

The melt flow rate (MFR) of the linear polypropylene-based resin is not particularly limited. The linear polypropylene-based resin has an MFR of, for example, preferably 0.5 g/10 minutes to 20.0 g/10 minutes, more preferably 1.0 g/ 10 minutes to 15.0 g/10 minutes, even more preferably 2.0 g/10 minutes to 12.0 g/10 minutes, and particularly preferably 2.0 g/10 minutes to 10.0 g/10 minutes.

In the present specification, the MFR of the linear polypropylene-based resin is a value determined by carrying out measurement in accordance with ISO 1133 under conditions that are a temperature of 230°C and a load of 2.16 kg.

(Polypropylene-based resin having branched structure)

The polypropylene-based resin having a branched structure (branched polypropylene-based resin) can be obtained by introducing a branched structure into a linear polypropylene-based resin. Examples of a method of introducing a branched structure into a linear polypropylene-based resin include, but are not particularly limited to, (a1) a method of irradiating, with radial rays, a linear polypropylene-based resin and (a2) a method of melting and kneading a mixture containing a linear polypropylene-based resin, a conjugated diene compound, and a radical polymerization initiator. The polypropylene-based resin having a branched structure is preferably a resin obtained by the method (a2), that is, a polypropylene-based resin having a branched structure that is obtained by melting and kneading a mixture containing a linear polypropylene-based resin, a conjugated diene compound, and a radical polymerization initiator.

Specific examples of the method (a1) include a method disclosed in Published Japanese Translation of PCT International Application, Tokuhyo, No. 2002-542360.

The method (a2) will be described in more detail. In the method (a2), it is possible to obtain the branched polypropylene-based resin by, for example, sequentially carrying out the following (i) to (iv): (i) a mixture containing a linear polypropylene-based resin, a conjugated diene compound, and a radical polymerization initiator is melted and kneaded with use of a device including a die; (ii) a resulting melted and kneaded product is extruded through the die; (iii) the melted and kneaded product thus extruded (also referred to as a strand) is cooled; and (iv) simultaneously with and/or after cooling of the strand, the strand is chopped. Specific examples of the method (a2) include a method disclosed in WO2020/004429.

In an embodiment of the present invention, the branched polypropylene-based resin is preferably a branched polypropylene-based resin obtained by the method (a2) because: (i) it is possible to stably introduce a branched structure into the linear polypropylene-based resin, and the reproducibility of introduction of a branched structure is high; and/or (ii) it is possible to obtain a branched polypropylene-based resin with high productivity without any need for complicated equipment.

(Melt tension of branched polypropylene-based resin)

The melt tension of the branched polypropylene-based resin can be higher than the melt tension of the linear polypropylene-based resin. The melt tension of the branched polypropylene-based resin is 5 cN to 50 cN, preferably 6 cN to 40 cN, more preferably 7 cN to 30 cN, even more preferably 8 cN to 25 cN, and particularly preferably 10 cN to 20 cN. In a case where the melt tension of the branched polypropylene-based resin is not less than 5 cN and a composition containing the branched polypropylene-based resin and the blowing agent is completely melted and expanded, the composition has a sufficiently high tension. This makes it possible to prevent a cell in resulting extruded expanded particles from being broken. This provides (a) an advantage that the resulting extruded expanded particles have excellent moldability and (b) an advantage that the resulting extruded expanded particles are capable of providing a foamed molded product having excellent resistance to breakage. In a case where the melt tension of the branched polypropylene-based resin is not more than 50 cN, in an extrusion expansion step, a resin pressure (a force with which a melted and kneaded product is to press a pressure gauge provided on the production device) is not excessively high. This makes it possible to achieve a relatively large discharge amount. This provides an advantage of making it possible to obtain extruded expanded particles with high productivity.

In the present specification, the melt tension of the branched polypropylene-based resin is measured with use of a Capilograph 1D (available from TOYO SEIKI SEISAKU-SHO, LTD., Japan). Specifically, the melt tension is measured by the following (1) to (5): (1) a 9.55-mm diameter barrel which has been heated to a test temperature (200°C) is filled with a sample resin (the branched polypropylene-based resin) for measurement; (2) next, the sample resin is heated for 10 minutes in the barrel which has been heated to the test temperature (200°C); (3) subsequently, while the sample resin is taken out in a strand shape from a capillary die (diameter: 1.0 mm, length: 10 mm) at a piston falling speed kept constant (10 mm/minute), this strand-like sample resin is caused to pass through a pulley which is for detecting a tension and which is located 350 mm below the capillary die, and then wind-up of the strand-like sample resin is started with use of a wind-up roll; (4) after take-off of the strand-like sample resin becomes stable, the wind-up speed of the strand-like sample resin is increased from an initial speed of 1.0 m/minute to a speed of 200 m/minute at a constant rate in 4 minutes; and (5) a load acting on the pulley, which is equipped with a load cell, at a time when the strand-like sample resin fractures is measured as the melt tension.

(MFR of branched polypropylene-based resin)

The MFR of the branched polypropylene-based resin is not particularly limited. The branched polypropylene-based resin has an MFR of, for example, preferably 0.5 g/10 minutes to 20.0 g/10 minutes, more preferably 1.0 g/10 minutes to 15.0 g/10 minutes, even more preferably 2.0 g/10 minutes to 12.0 g/10 minutes, and particularly preferably 2.0 g/10 minutes to 10.0 g/10 minutes. The branched polypropylene-based resin that has an MFR in the above-described range provides (a) an advantage that resulting extruded expanded particles have excellent moldability and (b) an advantage that the resulting extruded expanded particles are capable of providing a foamed molded product having excellent resistance to breakage. (a) The branched polypropylene-based resin that has an MFR of not less than 0.5 g/10 minutes provides an advantage that extruded expanded particles obtained from the branched polypropylene-based resin make it possible to provide a foamed molded product which is less deformed and has a good surface property (beautiful surface). (b) The branched polypropylene-based resin that has an MFR of not more than 20.0 g/10 minutes provides an advantage that a composition containing extruded expanded particles obtained from the branched polypropylene-based resin has good expandability during extrusion expansion of the composition.

In the present specification, the MFR of the branched polypropylene-based resin is a value determined by carrying out measurement in accordance with ISO 1133 under conditions that are a temperature of 230°C and a load of 2.16 kg.

(Melting point of branched polypropylene-based resin)

The melting point of the branched polypropylene-based resin is not particularly limited. The melting point of the branched polypropylene-based resin is, for example, preferably 130°C to 165°C and more preferably 135°C to 164°C. The branched polypropylene-based resin that has a melting point in the above-described range provides (a) an advantage that resulting extruded expanded particles have excellent moldability and (b) an advantage that the resulting extruded expanded particles are capable of providing a foamed molded product having excellent resistance to breakage. The melting point of the branched polypropylene-based resin, like the melting point of the linear polypropylene-based resin, is a value determined by carrying out measurement by the DSC method.

The base resin contains the branched polypropylene-based resin in a proportion of preferably 64.5% by weight to 94.5% by weight, more preferably 64.5% by weight to 90.0% by weight, and even more preferably 65% by weight to 90.0% by weight, with respect to 100% by weight of the base resin. This feature provides (a) an advantage that resulting extruded expanded particles have excellent moldability and (b) an advantage that the resulting extruded expanded particles are capable of providing a foamed molded product having excellent resistance to breakage. Note that the amount of the branched polypropylene-based resin contained in the base resin can also be described as the amount of the branched polypropylene-based resin used to produce the extruded expanded particles.

(Thermoplastic elastomer)

In the present specification, the thermoplastic elastomer is intended to mean a thermoplastic elastomer having a Shore A hardness of 20 to 95 as measured in accordance with ISO 868. The thermoplastic elastomer can also be described as a resin having a thermoplastic resin as a hard segment and having a rubber component as a soft segment.

Examples of the thermoplastic elastomer include polyolefin-based elastomers, polyolefin-based plastomers, polystyrene-based elastomers, polyvinyl chloride-based elastomers, polyester-based elastomers, polyurethane-based elastomers, and polyamide-based elastomers. Examples of the polyolefin-based elastomers include: TAFMER (registered trademark) and MILASTOMER (registered trademark) (Mitsui Chemicals, Inc.); LUCENE (registered trademark) (LG Chem); VERSIFY (registered trademark) (Dow Inc.); ESPOLEX (registered trademark) (Sumitomo Chemical Co., Ltd.); MULTIUSE LEOSTOMER (registered trademark) (Riken Technos Corporation); and Vistamaxx (registered trademark) (Exxon Mobil Corporation). Examples of the polyolefin-based plastomers include: EXCELLEN (registered trademark) FX and TAFTHREN (registered trademark) (Sumitomo Chemical Co., Ltd.); AFFINITY (registered trademark) (Dow Inc.); and Queo (registered trademark) (Borealis AG). One of these thermoplastic elastomers may be used solely, or at least two of these thermoplastic elastomers may be used in combination.

The thermoplastic elastomer is preferably a polyolefin-based elastomer and/or a polyolefin-based plastomer, and is more preferably a polyolefin-based elastomer, from the viewpoint of high elasticity performance and compatibility with a polypropylene-based resin. The thermoplastic elastomer is preferably a thermoplastic elastomer having, in one molecule, (a) a polyolefin such as polypropylene or polyethylene as a hard segment and (b) a rubber component such as ethylene/α-olefin rubber as a soft segment. A thermoplastic elastomer having polypropylene or polyethylene as a hard segment has high compatibility with a polypropylene-based resin. Further, a thermoplastic elastomer having, as a soft segment, at least one selected from the group consisting of ethylene/propylene rubber, ethylene/1-butene rubber, ethylene/propylene/diene rubber, and ethylene/1-octene rubber has higher compatibility with a polypropylene-based resin. Thus, particularly preferable as a thermoplastic elastomer is (a) the thermoplastic elastomer having polypropylene or polyethylene as a hard segment, (b) the thermoplastic elastomer having, as a soft segment, at least one selected from the group consisting of ethylene/propylene rubber, ethylene/1-butene rubber, ethylene/propylene/diene rubber, and ethylene/1-octene rubber, or (c) the thermoplastic elastomer having, in one molecule, (i) a polyolefin such as polypropylene or polyethylene as a hard segment and (ii) a rubber component such as ethylene-α-olefin rubber as a soft segment.

The thermoplastic elastomer has a tensile elongation at break of preferably not less than 500%, more preferably not less than 600%, even more preferably not less than 650%, and particularly preferably not less than 700%. The thermoplastic elastomer has a tensile elongation at break of preferably not more than 10000% and more preferably not more than 5000%. This feature provides an advantage that the flexibility of a branched polypropylene-based resin, extruded expanded particles, and a foamed molded product is enhanced so that breakage is less likely to occur when deformation is caused by application of a force. In the present specification, the tensile elongation at break of the thermoplastic elastomer is a value determined by carrying out measurement on the thermoplastic elastomer as a sample in accordance with ASTM D638.

The melting point of the thermoplastic elastomer is not particularly limited. The melting point of the thermoplastic elastomer is, for example, preferably 40°C to 110°C, more preferably 50°C to 90°C, and particularly preferably 60°C to 80°C. This feature enhances the flexibility of extruded expanded particles and a foamed molded product. As a result, there is an advantage that, when the resulting foamed molded product is deformed by application of a force, the foamed molded product is less likely to break.

In the present specification, the melting point of the thermoplastic elastomer is a value determined by carrying out measurement by the DSC method. Specifically, a DSC curve of the thermoplastic elastomer can be obtained by the same method as the method of measuring the melting point of the linear polypropylene-based resin except that the thermoplastic elastomer is used instead of the linear polypropylene-based resin. Like the melting point of the linear polypropylene-based resin, the melting point of the thermoplastic elastomer can be obtained from the DSC curve of the thermoplastic elastomer.

The thermoplastic elastomer has an MFR of preferably 0.3 g/10 minutes to 10.0 g/10 minutes, more preferably 0.5 g/10 minutes to 8.0 g/10 minutes, more preferably 0.7 g/10 minutes to 6.0 g/10 minutes, and more preferably 1.0 g/10 minutes to 5.0 g/10 minutes. This feature increases compatibility between the thermoplastic elastomer and the branched polypropylene-based resin and enhances flexibility of resulting extruded expanded particles and a resulting foamed molded product. As a result, there is an advantage that, when the resulting foamed molded product is deformed by application of a force, the foamed molded product is less likely to break.

In the present specification, the MFR of the thermoplastic elastomer is a value determined by carrying out measurement in accordance with ISO 1133 under conditions that are a temperature of 230°C and a load of 2.16 kg.

The thermoplastic elastomer has a flexural modulus of preferably 10 MPa to 200 MPa, more preferably 15 MPa to 100 MPa, more preferably 20 MPa to 80 MPa, and particularly preferably 25 MPa to 70 MPa. This feature enhances the flexibility of extruded expanded particles and a foamed molded product. As a result, there is an advantage that, when the resulting foamed molded product is deformed by application of a force, the foamed molded product is less likely to break. In the present specification, the flexural modulus of the thermoplastic elastomer is a value determined by carrying out measurement on the thermoplastic elastomer as a sample in accordance with ISO 178.

As the thermoplastic elastomer, a commercially available product can be used. Examples of the commercially available product of the thermoplastic elastomer suitably usable in an embodiment of the present invention include the following polyolefin-based elastomers: "LUCENE LC180" available from LG Chem; and "VERSIFY 2300" available from Dow Inc.

The base resin contains the thermoplastic elastomer in a proportion of preferably 5.0% by weight to 35.0% by weight, more preferably 6.0% by weight to 30.0% by weight, more preferably 8.0% by weight to 25.0% by weight, even more preferably 10.0% by weight to 25.0% by weight, and particularly preferably 12.0% by weight to 20.0% by weight, with respect to 100% by weight of the base resin. This feature provides (a) an advantage that resulting extruded expanded particles have excellent moldability and (b) an advantage that the resulting extruded expanded particles are capable of providing a foamed molded product having excellent resistance to breakage. Note that the amount of the thermoplastic elastomer contained in the base resin can also be described as the amount of the thermoplastic elastomer used to produce the extruded expanded particles.

(Inorganic coloring agent)

The inorganic coloring agent can include, for example, a black coloring agent, a red coloring agent, a green coloring agent, a blue coloring agent, and a yellow coloring agent and can also include a white coloring agent. Examples of the inorganic coloring agent include carbon black, bole, ocher, green ocher, titanium oxide, cobalt blue, Prussian blue, and chromium oxide green. One of these inorganic coloring agents may be used solely, or at least two of these inorganic coloring agents may be used in combination. The inorganic coloring agent preferably includes at least one selected from the group consisting of carbon black, bole, ocher, green ocher, titanium oxide, cobalt blue, Prussian blue, and chromium oxide green, and is more preferably at least one selected from this group. The inorganic coloring agent is particularly preferably carbon black from the viewpoint of ultraviolet absorption performance.

The base resin contains the inorganic coloring agent in a proportion of preferably 0.5% by weight to 5.0% by weight, more preferably 0.5% by weight to 4.5% by weight, more preferably 0.5% by weight to 4.0% by weight, even more preferably 1.0% by weight to 3.5% by weight, and particularly preferably 1.0% by weight to 3.0% by weight, with respect to 100% by weight of the base resin. This feature provides an advantage that the extruded expanded particles obtained by the extrusion foaming method tend to have a low open cell ratio. Note that the amount of the inorganic coloring agent contained in the base resin can also be described as the amount of the inorganic coloring agent used to produce the extruded expanded particles.

(Additional resin or rubber)

The base resin may further contain: a resin (hereinafter also referred to as "additional resin") other than the branched polypropylene-based resin and the thermoplastic elastomer; or rubber to an extent that the additional resin or rubber does not impair an effect in accordance with an embodiment of the present invention. Examples of the additional resin other than the branched polypropylene-based resin include: (a) linear polypropylene-based resins, such as an ethylene/propylene random copolymer, an ethylene/propylene block copolymer, and a propylene homopolymer; (b) ethylene-based resins such as high-density polyethylene, medium-density polyethylene, low-density polyethylene, linear low-density polyethylene, linear very-low-density polyethylene, an ethylene/vinyl acetate copolymer, an ethylene/acrylic acid copolymer, and an ethylene/methacrylic acid copolymer; and (c) styrene-based resins such as polystyrene, a styrene/maleic anhydride copolymer, and a styrene/ethylene copolymer. Examples of the rubber include olefin-based rubbers such as ethylene/propylene rubber, ethylene/butene rubber, ethylene/hexene rubber, and ethylene/octene rubber. The base resin preferably contains the additional resin in a proportion of 0% by weight to 20% by weight with respect to 100% by weight of the base resin.

(Cell nucleating agent)

The base resin may contain a cell nucleating agent. In other words, the cell nucleating agent may be used to produce the present extruded expanded particles. Use of the cell nucleating agent makes it possible to control the number and shape of cells of resulting extruded expanded particles.

Examples of the cell nucleating agent include a sodium bicarbonate-citric acid mixture, monosodium citrate, talc, and calcium carbonate. One of these cell nucleating agents may be used solely, or at least two of these cell nucleating agents may be used in combination.

The amount of the cell nucleating agent contained in the base resin, i.e., the amount of the cell nucleating agent used to produce the extruded expanded particles is not particularly limited. The cell nucleating agent is contained in an amount of, for example, preferably 0.01 parts by weight to 5.00 parts by weight, more preferably 0.01 parts by weight to 3.50 parts by weight, even more preferably 0.01 parts by weight to 1.00 parts by weight, and particularly preferably 0.01 parts by weight to 0.50 parts by weight, relative to 100 parts by weight of the polypropylene-based resin. This feature provides an advantage that the extruded expanded particles tend to have a uniform cell size (average cell diameter) and a uniform cell shape and consequently expandability during extrusion expansion tends to be easily stabilized. Note that the "cell" is intended to mean a "cell".

(Organic coloring agent)

The base resin may contain an organic coloring agent to an extent that the organic coloring agent does not impair an effect in accordance with an embodiment of the present invention. Examples of the organic coloring agent include a perylene-based organic pigment, an azo-based organic pigment, a quinacridone-based organic pigment, a phthalocyanine-based organic pigment, a threne-based organic pigment, a dioxazine-based organic pigment, and an isoindoline-based organic pigment. One of these organic coloring agents may be used solely, or at least two of these organic coloring agents may be used in combination. The amount of the organic coloring agent contained in the base resin is not particularly limited.

(Other component(s))

As necessary, the base resin may further contain, as other component(s), (a) a stabilizer(s) such as an antioxidant, a metal deactivator, a phosphorous processing stabilizer, an ultraviolet absorber, an ultraviolet stabilizer, a fluorescent brightening agent, metallic soap, and/or an antacid adsorbent and/or (b) an additive(s) such as a lubricant, a plasticizer, a filler, a reinforcer, a flame retardant, and/or an antistatic agent. One of these other components may be used solely, or at least two of these other components may be used in combination.

The types and amounts of branched polypropylene-based resin, thermoplastic elastomer, inorganic coloring agent, and additional resin or rubber which are contained in the base resin included in the extruded expanded particles or the base resin included in the foamed molded product obtained from the extruded expanded particles, i.e., the base resin that substantially constitutes the extruded expanded particles or the foamed molded product, are not substantially changed by the operation of melting the extruded expanded particles or the foamed molded product under reduced pressure to cause the base resin to revert to a mass of resin. In the present specification, obtaining a mass of resin by melting, under reduced pressure, the extruded expanded particles or a foamed molded product obtained from the extruded expanded particles may be referred to as "resin returning". The mass of resin obtained by the resin returning may be referred to as "returned resin". In the present specification, the types and amounts of branched polypropylene-based resin, thermoplastic elastomer, inorganic coloring agent, and additional resin or rubber which are contained in the returned resin can be regarded as the types and amounts of branched polypropylene-based resin, thermoplastic elastomer, inorganic coloring agent, and additional resin or rubber which are contained in a base resin. The types and amounts of branched polypropylene-based resin, thermoplastic elastomer, inorganic coloring agent, and additional resin or rubber which are contained in the returned resin can be determined through analysis of the returned resin by any known method.

Examples of a specific method of resin returning include, but are not particularly limited to, a method of sequentially carrying out the following (b1) to (b5): (b1) the extruded expanded particles or the foamed molded product are put in a dryer adjusted to a temperature 10°C higher than the melting point of the extruded expanded particles or the foamed molded product; (b2) subsequently, the pressure inside the dryer is reduced to -0.05 MPa (gage pressure) to -0.10 MPa (gage pressure) over 5 to 10 minutes with use of a vacuum pump; (b3) thereafter, the extruded expanded particles or the foamed molded product are left to stand in the dryer for 30 minutes for preparation of a mass of resin (returned resin); (b4) subsequently, the temperature in the dryer is cooled to room temperature, and the pressure in the dryer is then returned to normal pressure; and (b5) thereafter, the mass of resin is taken out of the dryer.

In the present specification, the melting point of the extruded expanded particles or the foamed molded product is a value determined by carrying out measurement by the DSC method. Specifically, a DSC curve of the extruded expanded particles or the foamed molded product can be obtained by the same method as the method of measuring the melting point of the linear polypropylene-based resin except that the extruded expanded particles or the foamed molded product is used instead of the linear polypropylene-based resin. Like the melting point of the linear polypropylene-based resin, the melting point of the extruded expanded particles or the foamed molded product can be determined from the DSC curve of the extruded expanded particles or the foamed molded product.

(2-2. Method of producing polypropylene-based resin extruded expanded particles)

A method of producing the present extruded expanded particles is not particularly limited, and a known extrusion foaming method can be employed. Examples of an aspect of the method of producing the present extruded expanded particles include the following aspect: A method of producing polypropylene-based resin extruded expanded particles, the method including: a first step of producing an extruded foam by an extrusion foaming method with use of a branched polypropylene-based resin, a thermoplastic elastomer, an inorganic coloring agent, and a blowing agent; and a second step of producing extruded expanded particles by cutting, in a particle shape, the extruded foam having been obtained in the first step.

(First step)

The first step will be specifically described. Specific examples of the first step include a step of sequentially carrying out the following (c1) and (c2): (c1) a melting and kneading step of melting and kneading a composition that contains a blowing agent and a resin mixture containing a branched polypropylene-based resin, a thermoplastic elastomer, and an inorganic coloring agent with use of a device which is equipped with a die to obtain a melted and kneaded product; and (c2) an extrusion expansion step of extruding, through the die, the melted and kneaded product obtained in a region (low pressure region) which has a pressure lower than a pressure in the device to obtain an extruded foam.

In the first step, in the above (c1) in particular, it is possible, as necessary, to further use a cell nucleating agent, a stabilizer(s) (e.g., an antioxidant, a metal deactivator, a phosphorous processing stabilizer, an ultraviolet absorber, an ultraviolet stabilizer, a fluorescent brightening agent, metallic soap, an antacid adsorbent, and/or the like), and an additive(s) (e.g., a coloring agent, a lubricant, a plasticizer, a filler, a reinforcer, a pigment, a dye, a flame retardant, an antistatic agent, and/or the like).

The resin mixture in the above (c1) can also be described as a base resin. In the above (c1), the branched polypropylene-based resin, the thermoplastic elastomer, the inorganic coloring agent, and the blowing agent, as well as an additional resin, a cell nucleating agent, and other component(s) that can be optionally used, may be mixed before being supplied to the device or may be mixed in the device. In other words, in the above (c1), the composition may be supplied to the device, or the composition may be prepared (completed) in the device. In the above (c1), there is no particular limitation to (i) a method and an order in which the branched polypropylene-based resin, the thermoplastic elastomer, the inorganic coloring agent, and the blowing agent, as well as an additional resin, a cell nucleating agent, and other component(s) that can be optionally used are mixed or (ii) a method and an order in which the branched polypropylene-based resin, the thermoplastic elastomer, the inorganic coloring agent, and the blowing agent, as well as an additional resin, a cell nucleating agent, and other component(s) that can be optionally used are supplied to the device.

In the above (c1), the inorganic coloring agent may be blended (used) in the form of a masterbatch. The masterbatch of the inorganic coloring agent can be obtained by mixing the inorganic coloring agent and any resin (e.g., a polypropylene group resin) in any ratio. The concentration of the inorganic coloring agent in the masterbatch is not particularly limited. The masterbatch may be, for example, a masterbatch containing the inorganic coloring agent in a proportion of 40% by weight with respect to 100% by weight of the masterbatch.

In the above (c2), the melted and kneaded product may be cooled before being extruded into a low pressure region.

The blowing agent used in an embodiment of the present invention is not particularly limited, and a known organic blowing agent and a known inorganic blowing agent can be used. Examples of the organic blowing agent include aliphatic hydrocarbons such as propane and fluorinated hydrocarbons such as difluoroethane. Examples of the inorganic blowing agent include inorganic gases such as carbon dioxide, air, and nitrogen, and water. One of the above-described blowing agents may be used solely, or at least two of the above-described blowing agents may be used in combination. Used as the blowing agent to obtain the polypropylene-based resin extruded expanded particles is preferably at least one substance selected from the group consisting of aliphatic hydrocarbons, fluorinated hydrocarbons, carbon dioxide, air, nitrogen, and water, more preferably at least one substance selected from the group consisting of carbon dioxide, air, nitrogen, and water, and even more preferably carbon dioxide. An amount of the blowing agent used in the first step only needs to be adjusted as appropriate in accordance with a type of the blowing agent and a target expansion ratio of the polypropylene-based resin extruded expanded particles.

(Second step)

The second step is a step of producing extruded expanded particles by cutting, in a particle shape, the extruded foam having been obtained in the first step. Note that the phrase "cutting ... in a particle shape" is also described as "chopping". The extruded expanded particles obtained in the second step are polypropylene-based resin extruded expanded particles.

As a chopping method, that is, a cutting method in the second step, a cold cutting method or a hot cutting method is preferable. Examples of the cold cutting method include a strand cutting method. Examples of the hot cutting method include an underwater cutting method and a watering cutting method.

The extruded foam having been obtained in the first step may be in a state of having been completely expanded before being cut in a particle shape in the second step or may be in a state of having been partially expanded. That is, in the second step, an extruded foam that has been completely expanded may be cut in a particle shape, or alternatively, an extruded foam that has been partially expanded may be cut in a particle shape. In other words, the extruded foam having been obtained in the first step includes an extruded foam that has been completely expanded and an extruded foam that has been partially expanded.

In the second step, the extruded foam may be cooled before cutting of the extruded foam in a particle shape, simultaneously with the cutting, or after the cutting.

(2-3. Physical properties and the like of polypropylene-based resin extruded expanded particles)

(Open cell ratio)

It is more preferable that the present extruded expanded particles have a lower open cell ratio. The present extruded expanded particles have an open cell ratio of preferably not more than 15%, more preferably not more than 10%, even more preferably not more than 7%, and particularly preferably not more than 5%. The open cell ratio of the present polypropylene-based resin extruded expanded particles has a lower limit that is exemplified by, but not particularly limited to, not less than 0.0%. This feature provides (a) an advantage that the extruded expanded particles have excellent moldability because cells of the extruded expanded particles are hardly broken and shrunk during molding of the extruded expanded particles and (b) an advantage that a foamed molded product obtained with use of the extruded expanded particles exhibits, to a greater degree, characteristics such as the capability of being formed in any shape, shock-absorbing properties, lightweight properties, compressive strength, and heat insulating properties.

In the present specification, the open cell ratio of the polypropylene-based resin extruded expanded particles is a value determined by carrying out measurement with use of an air-comparison pycnometer [Model 1000, available from Tokyo-Science Co., Ltd.] in accordance with a method described in PROCEDURE C of ASTM D2856-87. Specifically, the open cell ratio of the extruded expanded particles is calculated by sequentially carrying out the following (1) to (3): (1) a volume Vc (cm$^3$) of the extruded expanded particles is measured with use of the air-comparison pycnometer; (2) subsequently, the whole extruded expanded particles whose Vc has been measured are submerged in ethanol contained in a graduated cylinder; (3) thereafter, an apparent volume Va (cm$^3$) of the extruded expanded particles is determined from the amount of increase in position of the ethanol in the graduated cylinder; and (4) the open cell ratio of the extruded expanded particles is calculated by the following formula: Open cell ratio (%) = ((Va-Vc) $\times$ 100) / Va. This method of measuring the volume Va is also referred to as a submersion method.

(Average cell diameter)

The present extruded expanded particles have an average cell diameter of preferably 100 $\mu$m to 500 $\mu$m, more preferably 100 $\mu$m to 400 $\mu$m, even more preferably 120 $\mu$m to 350 $\mu$m, and particularly preferably 150 $\mu$m to 300 $\mu$m. This feature provides an advantage that the extruded expanded particles have excellent moldability because cells of the extruded expanded particles are hardly broken and shrunk during molding of the extruded expanded particles.

In the present specification, the average cell diameter of the polypropylene-based resin extruded expanded particles is specifically a value calculated by sequentially carrying out the following (1) to (4): (1) an extruded expanded particle is cut with use of a blade razer in such a manner that the blade razor passes through the center of the extruded expanded particle; (2) a cut surface of the extruded expanded particle thus obtained is observed with use of an optical microscope; (3) a 2000 $\mu$m straight line is drawn on the cut surface, the number of cells present on the straight line is measured, the number of cells present on the straight line of 10 extruded expanded particles are measured, and an arithmetic mean value of the number of such cells is calculated; and (4) a value obtained by measurement based on the following formula is regarded as an average cell diameter (that is, also described as an area average diameter) of the extruded expanded particles:

$$\text{Average cell diameter } (\mu m) = 2000 \, / \text{ average number of cells.}$$

(Bulk density)

The present extruded expanded particles have a bulk density of preferably not less than 60 g/L, more preferably not less than 70 g/L, even more preferably not less than 80 g/L, and particularly preferably not less than 90 g/L. The bulk density of the present extruded expanded particles has an upper limit that is exemplified by, but not particularly limited to, not more than 300 g/L. As described above, as the tendency of fracture of a foamed molded product which results from a deformation thereof, there is a tendency that, the lower the expansion ratio of extruded expanded particles which serve as a material for a foamed molded product, the lower the tensile elongation at break of a resulting foamed molded product. The present extruded expanded particles have the above-described feature and thus have an advantage of being capable of providing a foamed molded product having a high tensile elongation at break, that is, excellent resistance to breakage, even when the present extruded expanded particles have a low expansion ratio to such an extent that the present extruded expanded particles have a bulk density of not less than 60 g/L. Further, the extruded expanded particles having a bulk density in the above range also have an advantage that a polypropylene-based resin foamed molded product obtained with use of the extruded expanded particles exhibits, to a greater degree, characteristics such as capability of being formed in any shape, shock-absorbing properties, lightweight properties, and heat insulating properties. In a case where the expansion ratio of the extruded expanded particles obtained by the production of extruded expanded particles does not reach the above range, a method of increasing the expansion ratio by (i) pressurizing the insides of the obtained extruded expanded particles with use of an inert gas and then (ii) heating the extruded expanded particles (for example, a method disclosed in Japanese Patent Application Publication, Tokukaihei, No. 10-237212) can be also employed.

In the present specification, the bulk density of the polypropylene-based resin extruded expanded particles is calculated by sequentially carrying out the following (1) to (3): (1) a container having a known volume V (L), such as a graduated cylinder, a beaker, or a bucket, is filled with the extruded expanded particles to the brim; (2) the powder surface (the top surface) of the container is leveled, and the weight W (g) of the extruded expanded particles inside the container is measured; and (3) the bulk density of the extruded expanded particles is calculated based on the following formula:

$$\text{Bulk density (g/L)} = \text{weight W (g) of extruded expanded particles} / \text{volume V (L) of container.}$$

(Molding range)

The present extruded expanded particles have an advantage that the molding range thereof is broad (for example, more than 0). In the present specification, extruded expanded particles having a broader molding range are intended to mean that the extruded expanded particles have more excellent moldability. In the present specification, the "molding range of the extruded expanded particles" is intended to mean a range of a steam pressure (gage pressure) during in-mold foam molding in which range, when in-mold foam molding of the extruded expanded particles is carried out, it is possible to obtain a foamed molded product which satisfies the following: (x1) the extruded expanded particles are sufficiently fused together (for example, a fusion rate of not less than 80%); (x2) a gap between the extruded expanded particles is sufficiently filled; (x3) the foamed molded product has a beautiful surface; (x4) the foamed molded product does not have a melting surface; and (x5) the foamed molded product does not shrink by not less than 5% with respect to the dimensions of a mold used for in-mold foam molding, and the shape of the mold is transferred to the foamed molded product. In addition, in a case where a foamed molded product adheres to a mold and cannot be taken out, it is determined that it is impossible to obtain a foamed molded product. In the present specification, for example, in a case where the steam pressure during in-mold foam molding, which steam pressure makes it possible to obtain a foamed molded product which satisfies the above-described (x1) to (x5) when in-mold foam molding of the extruded expanded particles is carried out, is P1 to P2, a value obtained by P2 - P1 is defined as the "molding range of the extruded expanded particles". In the present specification, "P1 to P2" is also referred to as "workable steam pressure range".

In a case where the steam pressure is excessively low for the extruded expanded particles, the following foamed molded product may be obtained: (a) the extruded expanded particles are insufficiently fused together; (b) a gap between the extruded expanded particles is not sufficiently filled; (c) the foamed molded product has poor surface appearance; and/or (d) as a result of a shrinkage of the foamed molded product, the shape of a mold used for in-mold foam molding is not transferred to the foamed molded product. In a case where the steam pressure is excessively high for the extruded expanded particles, the following foamed molded product may be obtained: (a) the foamed molded product has a melting surface and/or (b) the foamed molded product has insufficient compressive strength.

The workable steam pressure range for the present extruded expanded particles is not particularly limited. It is more preferable that the molding range of the present extruded expanded particles be broader. The present extruded expanded particles have a molding range of more preferably not less than 0.02 MPa, more preferably not less than 0.03 MPa, even more preferably not less than 0.04 MPa, and particularly preferably not less than 0.05 MPa.

(Crystallization peak)

Extruded expanded particles obtained by the extrusion foaming method have the characteristic that a single crystallization peak is present in a DSC curve of extruded expanded particles obtained by DSC. In other words, it is highly probable that polypropylene-based resin expanded particles having the characteristic that a single crystallization peak is present in a DSC curve of extruded expanded particles obtained by DSC are those obtained by the extrusion foaming method. The present extruded expanded particles can also have the characteristic that a single crystallization peak is present in a DSC curve of extruded expanded particles obtained by DSC.

In the present specification, the DSC curve of the extruded expanded particles used in calculation of the crystallization peak is a curve obtained by DSC while the temperature of 5 mg to 6 mg of the extruded expanded particles is increased from 40°C to 220°C at a temperature increase rate of 10°C/minute.

[3. Polypropylene-based resin foamed molded product]

A polypropylene-based resin foamed molded product in accordance with an embodiment of the present invention is obtained by molding of extruded expanded particles that include a base resin, the base resin containing, in a proportion of not less than 64.5% by weight with respect to 100% by weight of the base resin, a polypropylene-based resin having a branched structure, the extruded expanded particles having an open cell ratio of not more than 15.0%, the polypropylene-based resin foamed molded product having a density of 60 g/L to 300 g/L and a tensile elongation at break of not less than 10%.

The following will describe aspects of the present foamed molded product. For matters (e.g., base resin and open cell ratio) other than those detailed below, the descriptions in the section [2. Polypropylene-based resin extruded expanded particles] are employed as appropriate.

A method of molding extruded expanded particles is exemplified by, but not particularly limited to, in-mold foam molding with use of a mold including a fixed mold that cannot be driven and a movable mold that can be driven. An in-mold foam molding method is not particularly limited, and a known in-mold foam molding method can be employed.

(Density of foamed molded product)

The density of the present foamed molded product is 60 g/L to 300 g/L, preferably 70 g/L to 300 g/L, more preferably 80 g/L to 300 g/L, and even more preferably 90 g/L to 300 g/L. As the tendency of fracture of a foamed molded product which results from a deformation thereof, there is a tendency that, the lower the expansion ratio of a foamed molded product, the lower the tensile elongation at break of the resulting foamed molded product. The present foamed molded product has a density of not less than 60 g/L and a tensile elongation at break of not less than 10%. That is, the present foamed molded product has an advantage of having a low expansion ratio and excellent resistance to breakage. Further, the foamed molded product having a density in the above range also has an advantage that the foamed molded product exhibits, to a greater degree, characteristics such as capability of being formed in any shape, shock-absorbing properties, lightweight properties, and heat insulating properties.

In the present specification, the density of the polypropylene-based resin foamed molded product is calculated by sequentially carrying out the following (1) to (3): (1) a weight W1 (g) of the polypropylene-based resin foamed molded product is measured; (2) a volume V1 (L) of the polypropylene-based resin foamed molded product subjected to the measurement of the weight W1 is measured; and (3) W1 is divided by V1, and an obtained value is regarded as the density (g/L) of the polypropylene-based resin foamed molded product.

Note that, in (2), a method of measuring the volume of the foamed molded product is not particularly limited. For example, the foamed molded product is submerged in a container full of water, and the amount of water spilled over is measured to determine the volume V1. In a case where the foamed molded product is plate-like in shape, the volume V1 may be determined by carrying out calculation from measured length, width, and thickness dimensions of the foamed molded product. In addition, for the density measurement, a foamed molded product that has been sufficiently dried after molding and has been allowed to stand for 24 hours or longer at a room temperature of 23°C and at a humidity of 50% may be used.

(Tensile elongation at break)

The present foamed molded product has an advantage of having a high tensile elongation at break. In the present specification, a foamed molded product having a higher tensile elongation at break is intended to mean that the foamed molded product has excellent resistance to breakage.

The present foamed molded product has a tensile elongation at break of preferably not less than 10%, more preferably not less than 12%, more preferably not less than 13%, and particularly preferably not less than 15%.

In the present specification, the tensile elongation at break of a polypropylene-based resin foamed molded product is a value obtained through measurement by carrying out a tensile elongation test based on ISO 1798. Specifically, the tensile elongation at break of a foamed molded product is calculated by sequentially carrying out the following (1) to (4): (1) a foamed molded product having a dumbbell shape defined in ISO 1798 is prepared, and an obtained foamed molded product is regarded as a test piece; (2) opposite end portions of the test piece are fixed; (3) one of the opposite end portions is stretched until the test piece is broken; and (4) an elongation of the test piece at break is regarded as the tensile elongation at break of the foamed molded product.

A polypropylene-based resin foamed molded product in accordance with another embodiment of the present invention may have the following features: A polypropylene-based resin foamed molded product obtained by molding of the polypropylene-based resin extruded expanded particles described in the section [2. Polypropylene-based resin extruded expanded particles].

An embodiment of the present invention may be configured as below.

<1> Polypropylene-based resin extruded expanded particles including a base resin containing a polypropylene-based resin having a branched structure, wherein the polypropylene-based resin having a branched structure has a melt tension of 5 cN to 50 cN, and the base resin further contains a thermoplastic elastomer and an inorganic coloring agent.

<2> The polypropylene-based resin extruded expanded particles described in <1>, wherein the base resin contains, in a proportion of 64.5% by weight to 94.5% by weight with respect to 100% by weight of the base resin, the polypropylene-based resin having a branched structure.

<3> The polypropylene-based resin extruded expanded particles described in <1> or <2>, wherein the base resin contains, in a proportion of 5.0% by weight to 35.0% by weight with respect to 100% by weight of the base resin, the thermoplastic elastomer.

<4> The polypropylene-based resin extruded expanded particles described in any one of <1> to <3>, wherein the base resin contains, in a proportion of 0.5% by weight to 5.0% by weight with respect to 100% by weight of the base resin, the inorganic coloring agent.

<5> The polypropylene-based resin extruded expanded particles described in any one of <1> to <4>, wherein the inorganic coloring agent is at least one selected from the group consisting of carbon black, bole, ocher, green ocher, titanium oxide, cobalt blue, Prussian blue, and chromium oxide green.

<6> The polypropylene-based resin extruded expanded particles described in any one of <1> to <5>, wherein the thermoplastic elastomer is a polyolefin-based elastomer.

<7> The polypropylene-based resin extruded expanded particles described in any one of <1> to <6>, wherein the thermoplastic elastomer has a tensile elongation at break of 500% to 1000%.

<8> The polypropylene-based resin extruded expanded particles described in any one of <1> to <7>, wherein the thermoplastic elastomer has a melting point of 40°C to 110°C.

<9> The polypropylene-based resin extruded expanded particles described in any one of <1> to <8>, wherein the thermoplastic elastomer has a melt flow rate of 0.3 g/10 minutes to 10.0 g/10 minutes.

<10> The polypropylene-based resin extruded expanded particles described in any one of <1> to <9>, wherein the polypropylene-based resin having a branched structure has a melting point of 130°C to 165°C.

<11> The polypropylene-based resin extruded expanded particles described in any one of <1> to <10>, wherein the polypropylene-based resin having a branched structure is a polypropylene-based resin having a branched structure obtained by melting and kneading a mixture containing a linear polypropylene-based resin, a conjugated diene compound, and a radical polymerization initiator.

<12> The polypropylene-based resin extruded expanded particles described in any one of <1> to <11>, wherein used as a blowing agent to obtain the polypropylene-based resin extruded expanded particles is at least one substance selected from the group consisting of aliphatic hydrocarbons, fluorinated hydrocarbons, carbon dioxide, air, nitrogen, and water.

<13> The polypropylene-based resin extruded expanded particles described in any one of <1> to <12>, wherein the polypropylene-based resin extruded expanded particles have an open cell ratio of not more than 15%.

<14> The polypropylene-based resin extruded expanded particles described in any one of <1> to <13>, wherein the polypropylene-based resin extruded expanded particles have an average cell diameter of 100 $\mu$m to 500 $\mu$m.

<15> The polypropylene-based resin extruded expanded particles described in any one of <1> to <14>, wherein the polypropylene-based resin extruded expanded particles have a bulk density of not less than 60 g/L.

<16> The polypropylene-based resin extruded expanded particles described in <15>, wherein the bulk density is not more than 300 g/L.

<17> The polypropylene-based resin extruded expanded particles described in any one of <1> to <16>, wherein a molding range of extruded expanded particles is not less than 0.02 MPa, the molding range being a range of a steam pressure during in-mold foam molding in which range, when the in-mold foam molding of the extruded expanded particles is carried out, it is possible to obtain a foamed molded product that satisfies the following:

(1) the extruded expanded particles are fused together at a fusion rate of not less than 80%;
(2) a gap between the extruded expanded particles is sufficiently filled;
(3) a surface of the foamed molded product is beautiful;
(4) the surface of the foamed molded product is not melted; and
(5) the foamed molded product does not shrink by not less than 5'% with respect to the dimensions of a mold used for the in-mold foam molding, and the shape of the mold is transferred to the foamed molded product.

<18> The polypropylene-based resin extruded expanded particles described in any one of <1> to <17>, wherein the polypropylene-based resin having a branched structure has a melt flow rate of 0.5 g/ 10 minutes to 20.0 g/ 10 minutes.

<19> The polypropylene-based resin extruded expanded particles described in any one of <1> to <18>, wherein the thermoplastic elastomer has a flexural modulus of 10 MPa to 200 MPa.
<20> A polypropylene-based resin foamed molded product,

> the polypropylene-based resin foamed molded product being a foamed molded product obtained by molding extruded expanded particles that include a base resin, the base resin containing, in a proportion of not less than 64.5% by weight with respect to 100% by weight of the base resin, a polypropylene-based resin having a branched structure, wherein
> the extruded expanded particles has an open cell ratio of not more than 15.0%,
> the foamed molded product has a density of 60 g/L to 300 g/L, and
> the foamed molded product has a tensile elongation at break of not less than 10%.

<21> A polypropylene-based resin foamed molded product obtained by molding polypropylene-based resin extruded expanded particles described in any one of <1> to <19>.

Examples

The following will describe embodiments of the present invention in more detail with reference to Examples and Comparative Example. The present invention is not limited to Examples below.

(Measurement method and evaluation method)

<Melt tension of polypropylene-based resin having branched structure>

The melt tension of each branched polypropylene-based resin used in Examples and Comparative Example was measured with use of a Capilograph 1D (available from TOYO SEIKI SEISAKU-SHO, LTD., Japan). Specifically, the melt tension was measured by the following (1) to (5): (1) a 9.55-mm diameter barrel which had been heated to 200°C was filled with the branched polypropylene-based resin used in Examples and Comparative Example; (2) next, the branched polypropylene-based resin was heated for 10 minutes in the barrel which had been heated to 200°C; (3) subsequently, while the branched polypropylene-based resin was taken out in a strand shape from a capillary die (diameter: 1.0 mm, length: 10 mm) at a piston falling speed kept constant (10 mm/minute), this strand-like resin was caused to pass through a pulley which was for detecting a tension and which was located 350 mm below the capillary die, and then wind-up of the strand-like resin was started with use of a wind-up roll; (4) after take-off of the strand-like resin became stable, the wind-up speed of the strand-like resin was increased from an initial speed of 1.0 m/minute to a speed of 200 m/minute at a constant rate in 4 minutes; and (5) a load acting on the pulley, which was equipped with a load cell, at a time when the strand-like resin fractured was measured as the melt tension.

<Open cell ratio>

The open cell ratio of extruded expanded particles was measured in accordance with a method described in PROCEDURE C of ASTM D2856-87 with use of an air-comparison pycnometer [Model 1000, available from Tokyo-Science Co., Ltd.]. Specifically, the open cell ratio of the extruded expanded particles was calculated by sequentially carrying out the following (1) to (3): (1) a volume Vc ($cm^3$) of the extruded expanded particles was measured with use of the air-comparison pycnometer; (2) subsequently, the whole extruded expanded particles whose Vc had been measured were submerged in ethanol contained in a graduated cylinder; (3) thereafter, an apparent volume Va ($cm^3$) of the extruded expanded particles was determined from the amount of increase in position of the ethanol in the graduated cylinder; and (4) the open cell ratio of the extruded expanded particles was calculated by the following formula:

$$\mathrm{Open\ cell\ ratio\ (\%)} = ((Va-Vc) \times 100)\ /\ Va.$$

Obtained values are found in Tables 1 to 3.

<Average cell diameter>

The average cell diameter of the extruded expanded particles was calculated by sequentially carrying out the following (1) to (4): (1) an extruded expanded particle was cut with use of a blade razer in such a manner that the blade razor passed through the center of the extruded expanded particle; (2) a cut surface of the extruded expanded particle thus obtained was observed with use of an optical microscope; (3) a 2000 μm straight line was drawn on the cut surface, the number of cells present on the straight line was measured, the number of cells present on the straight line of 10 extruded expanded particles were measured, and an arithmetic mean value of the number of such cells was calculated; and (4) a value obtained by measurement based on the following formula was regarded as an average cell diameter (area average diameter) of the extruded expanded particles:

$$\text{Average cell diameter } (\mu m) = 2000 \,/\, \text{average number of cells.}$$

<Bulk density>

The bulk density of the extruded expanded particles was calculated by sequentially carrying out the following (1) to (3): (1) a container having a known volume V (L), such as a graduated cylinder, a beaker, or a bucket, was filled with the extruded expanded particles to the brim; (2) the powder surface (the top surface) of the container was leveled, and the weight W (g) of the extruded expanded particles inside the container was measured; and (3) the bulk density of the extruded expanded particles was calculated based on the following formula:

$$\text{Bulk density } (g/L) = \text{weight } W \, (g) \text{ of extruded expanded particles } /\, \text{volume } V \, (L) \text{ of container.}$$

Obtained values are found in Tables 1 to 3.

<Molding range>

Cracking of 18 mm was provided with respect to a mold measuring 381 mm long by 381 mm wide by 60 mm thick, and the extruded expanded particles were filled into the mold. In the in-mold foam molding, the extruded expanded particles were subjected to in-mold foam molding to obtain a polypropylene-based resin foamed molded product, while the steam pressure was varied by 0.02 MPa (gage pressure) within a predetermined range. In so doing, determined was a range of the steam pressure (gage pressure) during the in-mold foam molding, in which range it was possible to obtain a polypropylene-based resin foamed molded product which satisfied the following conditions: (x1) the extruded expanded particles are sufficiently fused together (internal fusion rate of not less than 80%); (x2) a gap between the extruded expanded particles is sufficiently filled; (x3) the foamed molded product has a beautiful surface; (x4) the foamed molded product does not have a melting surface; and (x5) the foamed molded product does not shrink by not less than 5% with respect to the dimensions of a mold used for in-mold foam molding, and the shape of the mold is transferred to the foamed molded product. Note that, for the evaluation, the foamed molded product that had been dried in a dryer of 75°C to 80°C for 12 hours to 24 hours after molding and had been allowed to stand for 24 hours or longer at 23°C and at a humidity of 50% was used.

In a case where the range of the steam pressure obtained by the above-described method is P1 to P2, the range "P1 to P2" was defined as "workable steam pressure range", and the "value" obtained by P2 - P1 was defined as "molding range of the extruded expanded particles". The "workable steam pressure range" and the "molding range of the polypropylene-based resin extruded expanded particles" are found in the columns "Steam pressure range" and "Molding range", respectively, in Tables 1 to 3.

<Internal fusion rate>

The measurement of the internal fusion rate of the polypropylene-based resin foamed molded product regarding the measurement of the molding range was made by carrying out the following (1) to (4): (1) with respect to any one surface of the polypropylene-based resin foamed molded product, a vertical cut was made with use of a cutter so as to be 1/20 to 1/5 of the thickness in a vertical direction of an area having this surface; (2) thereafter, the polypropylene-based resin foamed molded product was fractured by hand along the cut. Note that, in a case where the polypropylene-based resin foamed molded product was not cut by hand, a portion near the cut in the polypropylene-based resin foamed molded product was beaten with use of a hammer or the like so that the polypropylene-based resin foamed molded product was fractured along the cut; (3) in an obtained fracture cross-section, a certain area that excludes the cut portion and that includes a center portion in a thickness direction was visually observed, a total number of extruded expanded particles which were present in the certain area and the number of extruded expanded particles which were fractured in portions other than a particle interface in the certain area (i.e., extruded expanded particles which were fractured by themselves) were measured; and (4) the internal fusion rate was calculated based on the following formula (4):

$$\text{Internal fusion rate (\%)} = \text{(number of extruded expanded particles which were fractured in portions other than the particle interface in the certain area / total number of extruded expanded particles which were present in the certain area)} \times 100 \ ... \ (4)$$

<Density of foamed molded product>

The density of the foamed molded product was calculated by sequentially carrying out the following (1) to (3): (1) a weight W1 (g) of the foamed molded product was measured; (2) a volume V1 (L) was calculated from measured length, width, and thickness dimensions of the foamed molded product subjected to the measurement of the weight W1; (3) W1 was divided by V1, and an obtained value was regarded as the density (g/L) of the foamed molded product. Note that, for the density measurement, a foamed molded product that had been sufficiently dried after molding and had been allowed to stand for 24 hours or longer at a room temperature of 23°C and at a humidity of 50% was used.

<Tensile elongation at break>

A tensile elongation test based on ISO 1798 was carried out, and the tensile elongation at break of the foamed molded product was measured. Specifically, the tensile elongation at break of the foamed molded product was calculated by sequentially carrying out the following (1) to (4): (1) a foamed molded product having a dumbbell shape defined in ISO 1798 was prepared, and an obtained foamed molded product was regarded as a test piece; (2) opposite end portions of the test piece were fixed; (3) one of the opposite end portions was stretched until the test piece was broken; and (4) an elongation of the test piece at break was regarded as the tensile elongation at break of the foamed molded product. Obtained values are found in Tables 1 to 3.

<Measurement of density of test piece used in test for tensile elongation at break>

A volume Ld of the test piece (foamed molded product having a dumbbell shape) used in the test for tensile elongation at break was determined. Next, a weight Wd (g) of the test piece was measured with use of an electronic balance. Then, Wd was divided by Ld to determine the density of the test piece used in the test for tensile elongation at break. Obtained values are found in the column "Density of test piece" in Tables 1 to 3.

<Overall evaluations>

Overall evaluations based on the criteria below are found in Tables 1 to 3.

G (Good): the molding range is not less than 0.04 MPa, and the tensile elongation at break is not less than 10%.
F (Fair): Although the molding range is not less than 0.02 MPa and less than 0.04 MPa, the tensile elongation at break is not less than 10%. Alternatively, although the molding range is not less than 0.04 MPa, the tensile elongation at break is less than 10%.
P (Poor): The molding range is less than 0.02 MPa, and the tensile elongation at break is less than 10%.

(Materials)

The following materials were used in Examples and Comparative Example.

<Polypropylene-based resin having branched structure>

As a polypropylene-based resin having a branched structure, "WB140HMS" (actually measured value of melt tension: 14cN; melting point: 161°C) available from Borealis was used as a polypropylene-based resin having a melt tension of not less than 10 cN and not more than 50 cN.
Note that the actually measured value of the melt tension of the branched polypropylene-based resin was measured with use of a Capilograph 1D (available from TOYO SEIKI SEISAKU-SHO, LTD., Japan). Specifically, the melt tension was measured by the following (1) to (5): (1) a 9.55-mm diameter barrel which had been heated to a test temperature (200°C) was filled with a sample resin (the branched polypropylene-based resin) for measurement; (2) next, the sample resin was heated for 10 minutes in the barrel which had been heated to the test temperature (200°C); (3) subsequently, while the sample resin was taken out in a strand shape from a capillary die (diameter: 1.0 mm, length: 10 mm) at a piston falling speed kept constant (10 mm/minute), this strand-like sample resin was caused to pass through a pulley which was for detecting a tension and which was located 350 mm below the capillary die, and then wind-up of the strand-like sample resin was started with use of a wind-up roll; (4) after take-off of the strand-like sample resin became stable, the wind-up speed of the strand-like sample resin was increased from an initial speed of 1.0 m/minute to a speed of 200 m/minute at a constant rate in 4 minutes; and (5) a load acting on the pulley, which was equipped with a load cell, at a time when the strand-like sample resin fractures was measured as the melt tension. Further, the melting point of the branched polypropylene-based resin, like the melting point of the linear polypropylene-based resin, was a value determined by carrying out measurement by the DSC method, except that a thermoplastic elastomer was used instead of a linear polypropylene-based resin.

<Thermoplastic elastomer>

As a thermoplastic elastomer, a polyolefin-based elastomer resin ("LUCENE LC180" (abbreviated as E1) available from LG Chem) or a polyolefin-based elastomer resin ("VERSIFY 2300" (abbreviated as E2) available from Dow Inc.) was used. E1 has a tensile elongation at break of 850%, a melting point of 73°C, and an MFR of 2.3 g/10 minutes. E2 has a tensile elongation at break of 730%, a melting point of 66°C, and an MFR of 2.0 g/10 minutes. The tensile elongations at break of E1 and E2 were values determined by carrying out measurement on E1 and E2 as samples in accordance with ASTM D638. The melting points of E1 and E2, like the melting point of the above-described linear polypropylene-based resin, were values determined by carrying out measurement by the DSC method, except that the thermoplastic elastomer was used instead of the linear polypropylene-based resin. The MFRs of E1 and E2, like the MFR of the linear polypropylene-based resin, were values determined by carrying out measurement in accordance with ISO 1133 under conditions that were a temperature of 230°C and a load of 2.16 kg.

<Additional resin>

As an additional resin, ethylene/propylene random copolymer ("F-724NPC" available from Prime Polymer Co., Ltd.) was used.

<Inorganic coloring agent>

As an inorganic coloring agent, carbon black was used. Note that the carbon black was used in the form of a carbon black masterbatch having a carbon black concentration of 40%. The carbon black masterbatch was prepared as below. Carbon black was blended with a polypropylene-based resin so that the concentration of the carbon black became 40%, and a mixture thus obtained was melted and kneaded in an extruder. A melted and kneaded product thus obtained was extruded into water and cut. In this manner, the carbon masterbatch was produced. In the columns "Inorganic coloring agent" in Tables 1 to 3, a number outside the parentheses and a numerical value inside the parentheses are shown. The number outside the parentheses indicates the amount of carbon black masterbatch blended, and the numerical value inside the parentheses indicates the amount of carbon black actually blended.

<Cell nucleating agent>

As a cell nucleating agent, talc (Luzenac 20MO available from Imerys) was used.
Examples and Comparative Example are described below. Note that, in Examples and Comparative Example, a device in which a twin screw extruder having a screw diameter $\varphi$ of 26 mm, a melt cooler, a diverter valve, and a die were coupled in series was used as a device used to produce extruded expanded particles.

(Examples 1 to 9, Comparative Example 1, and Reference Examples 1 to 4)

The (a) polypropylene-based resin having a branched structure, the (b) thermoplastic elastomer and/or ethylene propylene random copolymer shown in Tables 1 to 3, the (c) inorganic coloring agent (carbon black masterbatch having a carbon black concentration of 40%), and the (d) cell nucleating agent were mixed in the amounts shown in Tables 1 to 3 to prepare a resin mixture. Next, the resin mixture was supplied to the twin screw extruder, and the resin mixture was melted and kneaded at a cylinder temperature of 210°C. Further, 3 parts by weight of carbon dioxide, serving as a blowing agent, with respect to 100 parts by weight of the polypropylene-based resin was supplied, with use of a metering pump, from an injection part provided in the middle of the extruder, and a composition thus obtained was further melted and kneaded.

The melted and kneaded product thus obtained was caused to pass through a melt cooler connected to a tip of the twin screw extruder and set at 185°C, so that the melted and kneaded product was cooled. Thereafter, the melted and kneaded product was extruded from a die mounted on a tip of the melt cooler into a region which had a pressure lower than the internal pressure of the device and which was filled with water, and the melted and kneaded product was expanded. In the region which was filled with water, the composition immediately after passing through the die was chopped with a rotation cutter attached to the tip of the die to obtain polypropylene-based resin extruded expanded particles. The temperature of the melted and kneaded product (composition) immediately before entering the die was 205°C. The temperature of the melted and kneaded product immediately before entering the die was measured by a thermometer that was set near an outlet of a diverter valve, specifically, at a location 10 mm upstream from an inlet of the die along an extrusion direction, so as to be in contact with the composition.

The pressure of water with respect to the composition in the region which was filled with water was set to 0.35 MPa (gage pressure) in Examples 1 to 7 and Comparative Example 1 and was set to 0.40 MPa (gage pressure) in Reference Examples 1 to 4.

For the extruded expanded particles thus obtained, measurements were carried out of open cell ratio, average cell diameter, and bulk density. Results of the measurements are shown in Tables 1 to 3. In addition, the molding range was evaluated using the obtained extruded expanded particles. Obtained results are found in the columns "Steam pressure range" and "Molding range" in Tables 1 to 3.

As to the extruded expanded particles thus obtained, with use of a molding machine (KD345) manufactured by DAISEN Co., Ltd., a block-shaped mold (400 mm in length × 300 mm in width × variable thickness) was adjusted so as to have a thickness of 52 mm (cracking ratio of 30%), and the mold was filled with the expanded particles obtained. The mold was then compressed so that the thickness of the mold was 40 mm. Subsequently, the air inside the mold was expelled with use of steam at 0.10 MPa (gage pressure), and thereafter, heat-molding was carried out for 10 seconds with use of steam at 0.20 MPa (gage pressure), so that a foamed molded product was obtained. For the foamed molded product thus obtained, measurements were carried out of density of the foamed molded product, density of test piece, and tensile elongation at break of test piece. Results of the measurements are shown in Tables 1 to 3. In addition, overall evaluations were made based on the above-described evaluation criteria. Results of the overall evaluations are shown in Tables 1 to 3.

(Reference Examples 5 and 6)

In Examples 1 to 9, Comparative Example 1, and Reference Examples 1 to 4, polypropylene-based resin extruded expanded particles were prepared by extrusion expansion. On the other hand, in Reference Examples 5 and 6 below, polypropylene-based resin expanded particles were prepared by pressure-release expansion. The following will describe a method of preparing the polypropylene-based resin expanded particles in Reference Examples 5 and 6.

[Preparation of polypropylene-based resin particles]

The ethylene/propylene random copolymer ("F-724NPC" available from Prime Polymer Co., Ltd.) described in the section <Additional resin> above and the cell nucleating agent, and, optionally, the inorganic coloring agent (carbon black masterbatch having a carbon black concentration of 40%) were mixed in the amounts shown in Table 3 to prepare a resin mixture. Next, the resin mixture was supplied to a twin screw extruder [TEM26 available from Shibaura Machine Co., Ltd.], and the resin mixture was melted and kneaded at a resin temperature of 215°C to 225°C. Then, a resulting melted and kneaded product was extruded in the form of a strand through a die. Next, the strand thus extruded was cooled with water in a water tank. Then, the strand thus cooled with water was cut to produce polypropylene-based resin particles (1.80 mg/ particle).

[Preparation of polypropylene-based resin expanded particles]

100 parts by weight of the obtained polypropylene-based resin particles, 200 parts by weight of water, 1.0 part by weight of tricalcium phosphate (basic) in powder form (dispersing agent), 0.06 parts by weight of n-paraffin sodium sulfonate (dispersion auxiliary agent), and 4 parts by weight of carbon dioxide (blowing agent) were placed in a 10 L pressure-resistant vessel. While the raw material (aqueous dispersion slurry) in the vessel was stirred, the temperature inside the vessel was increased to 156°C. After the temperature inside the vessel had reached 156°C, the state in which the temperature inside the vessel was maintained at 156°C was continued for 10 minutes. After that, carbon dioxide was additionally injected into the vessel, and the pressure inside the vessel was adjusted to 2.2 MPa (gage pressure).

Further, the temperature inside the vessel was increased to 158°C. After the temperature inside the vessel had reached 158°C, the temperature of 158°C inside the vessel and the pressure of 2.2 MPa (gage pressure) inside the vessel were maintained for 20 minutes.

After that, a valve at the bottom of the vessel was opened so that the aqueous dispersion slurry was released under atmospheric pressure through an orifice plate having a hole diameter φ of 4.0 mm. Though these operations, polypropylene-based resin expanded particles were obtained. The polypropylene-based resin expanded particles thus obtained were washed with 1% hydrochloric acid solution, thoroughly washed with water, and then dried.

For the polypropylene-based resin expanded particles obtained in this way, measurements were carried out of open cell ratio, average cell diameter, and bulk density. Results of the measurements are shown in Table 3. In addition, the molding range was evaluated using the obtained polypropylene-based resin expanded particles. Obtained results are found in the columns "Steam pressure range" and "Molding range" in Table 3.

The polypropylene-based resin expanded particles thus obtained were used to prepare a polypropylene-based resin foamed molded product in the same manner as described above. For the polypropylene-based resin foamed molded product thus obtained, measurements were carried out of density of the polypropylene-based resin foamed molded product, density of test piece, and tensile elongation at break of test piece. Results of the measurements are shown in Table 3. In addition, overall evaluations were made based on the above-described evaluation criteria. Results of the overall evaluations are shown in Table 3.

[Table 1]

| | | | Example 1 | Example 2 | Example 3 | Example 4 | Example 5 |
|---|---|---|---|---|---|---|---|
| Composition in 100 wt% of resin mixture (base resin) | Polypropylene resin having branched structure | wt% | 85.55 | 80.55 | 65.55 | 78.55 | 80.55 |
| | Thermoplastic elastomer E1 | wt% | 10.0 | 15.0 | 30.0 | 15.0 | |
| | Thermoplastic elastomer E2 | wt% | | | | | 15.0 |
| | Additional resin | wt% | | | | | |
| | Inorganic coloring agent | wt% | 4.25 (1.7) | 4.25 (1.7) | 4.25 (1.7) | 6.25 (2.5) | 4.25 (1.7) |
| | Cell nucleating agent | wt% | 0.20 | 0.20 | 0.20 | 0.20 | 0.20 |
| Extruded expanded particles | Open cell ratio | % | 8 | 9 | 12 | 11 | 8 |
| | Average cell diameter | μm | 150 | 160 | 160 | 160 | 150 |
| | Bulk density | g/L | 100 | 100 | 100 | 100 | 100 |
| | Steam pressure range | MPa | 0.38-0.42 | 0.38-0.42 | 0.36-0.40 | 0.38-0.42 | 0.38-0.42 |
| | Molding range | MPa | 0.04 | 0.04 | 0.04 | 0.04 | 0.04 |
| Foamed molded product | Density of foamed molded product | g/L | 150 | 150 | 150 | 150 | 150 |
| | Density of test piece | g/L | 140 | 140 | 140 | 140 | 140 |
| | Tensile elongation test — Tensile elongation at break | % | 10 | 13 | 24 | 12 | 13 |
| Overall evaluation | | - | G | G | G | G | G |

[Table 2]

| | | | | Example 6 | Example 7 | Example 8 | Example 9 |
|---|---|---|---|---|---|---|---|
| Composition in 100 wt% of resin mixture (base resin) | Polypropylene resin having branched structure | | wt% | 75.55 | 75.55 | 65.55 | 65.55 |
| | Thermoplastic elastomer | E1 | wt% | 15.0 | | 30.0 | 30.0 |
| | | E2 | wt% | | 15.0 | | |
| | Additional resin | | wt% | 5 | 5 | | |
| | Inorganic coloring agent | | wt% | 4.25 (1.7) | 4.25 (1.7) | 4.25 (1.7) | 4.25 (1.7) |
| | Cell nucleating agent | | wt% | 0.20 | 0.20 | 0.20 | 0.20 |
| Extruded expanded particles | Open cell ratio | | % | 5 | 7 | 13 | 5 |
| | Average cell diameter | | μm | 160 | 160 | 180 | 140 |
| | Bulk density | | g/L | 100 | 100 | 80 | 135 |
| | Steam pressure range | | MPa | 0.36-0.40 | 0.38-0.42 | 0.36-0.40 | 0.36-0.40 |
| | Molding range | | MPa | 0.04 | 0.04 | 0.04 | 0.04 |
| Foamed molded product | Density of foamed molded product | | g/L | 150 | 150 | 120 | 190 |
| | Tensile elongation test | Density of test piece | g/L | 140 | 140 | 110 | 175 |
| | | Tensile elongation at break | % | 13 | 12 | 29 | 19 |
| Overall evaluation | | | - | G | G | G | G |

[Table 3]

| | | | | Comparative Example 1 | Reference Example 1 | Reference Example 2 | Reference Example 3 | Reference Example 4 | Reference Example 5 | Reference Example 6 |
|---|---|---|---|---|---|---|---|---|---|---|
| Composition in 100 wt% of resin mixture (base resin) | Polypropylene resin having branched structure | | wt% | 95.55 | 99.80 | 84.80 | 69.80 | 84.80 | | |
| | Thermoplastic elastomer | E1 | wt% | | | | 15.0 | 30.0 | | |
| | | E2 | wt% | | 15.0 | | | | 15.0 | |
| | Additional resin | | wt% | 5 | 5 | | | | 99.80 | 95.55 |
| | Inorganic coloring agent | | wt% | 4.25 (1.7) | | | | | | 4.25 (1.7) |
| | Cell nucleating agent | | wt% | 0.20 | 0.20 | 0.20 | 0.20 | 0.20 | 0.20 | 0.20 |
| Extruded expanded particles | Open cell ratio | | % | 10 | 2 | 4 | 5 | 3 | 1 | 1 |
| | Average cell diameter | | μm | 160 | 190 | 190 | 190 | 200 | 190 | 160 |
| | Bulk density | | g/L | 100 | 100 | 100 | 100 | 100 | 100 | 100 |
| | Steam pressure range | | MPa | 0.42 | 0.36-0.42 | 0.36-0.42 | 0.36-0.40 | 0.36-0.42 | 0.30-0.40 | 0.30-0.40 |
| | Molding range | | MPa | 0 | 0.06 | 0.06 | 0.04 | 0.06 | 0.10 | 0.10 |
| Foamed molded product | Density of molded product | | g/L | 150 | 150 | 150 | 150 | 150 | 150 | 150 |
| | Tensile elongation test | Density of test piece | g/L | 140 | 140 | 140 | 140 | 140 | 140 | 140 |
| | | Tensile elongation at break | % | 6 | 7 | 13 | 24 | 13 | 16 | 15 |
| Overall evaluation | | | - | P | F | G | G | G | G | G |

EP 4 299 665 A1

24

From Reference Example 1 in Table 3, it is found that the foamed molded product using the extruded expanded particles which are constituted by including the polypropylene resin having a branched structure has a tensile elongation at break of 7% and has poor resistance to breakage. As shown in Reference Examples 2 to 4, it is found that the use of the thermoplastic elastomer increases the tensile elongation at break to not less than 10%. As shown in Comparative Example 1, it is found that, in a case where the polypropylene resin having a branched structure and the carbon black are used, but the thermoplastic elastomer is not used, the tensile elongation at break is 6%, the molding range is 0 MPa, and the resistance to breakage and the moldability are poor.

From Examples 1 to 9, it is found that, in a case where the polypropylene resin having a branched structure and the carbon black, and, additionally, the thermoplastic elastomer are used within the ranges of an embodiment of the present invention, the tensile elongation at break is not less than 10%, the molding range is not less than 0.04 MPa, and the resistance to breakage and the moldability are good.

In the cases of Reference Examples 5 and 6 in which the polypropylene-based resin expanded particles were prepared by pressure-release expansion, it is found that the moldability of the polypropylene-based resin expanded particles is good, and the resistance of the polypropylene-based resin foamed molded product to breakage is good. That is, with regard to the polypropylene-based resin expanded particles obtained by pressure-release expansion, it is found that, regardless of whether the polypropylene-based resin expanded particles contain an inorganic coloring agent, there is no possibility that the molding range for obtaining a conforming item of a polypropylene-based resin foamed molded product becomes significantly narrow, and there is also no possibility that the resistance of the polypropylene-based resin foamed molded product to breakage becomes significantly low.

Industrial Applicability

An embodiment of the present invention makes it possible to provide extruded expanded particles having excellent moldability. Therefore, an embodiment of the present invention can be suitably used to obtain a foamed molded product having excellent resistance to breakage. Therefore, an embodiment of the present invention can be suitably used in the fields of, for example, automotive interior materials, shock-absorbing materials, packaging materials, and heat insulating materials.

**Claims**

1. Polypropylene-based resin extruded expanded particles comprising a base resin containing a polypropylene-based resin having a branched structure,
   wherein the polypropylene-based resin having a branched structure has a melt tension of 5 cN to 50 cN, and the base resin further contains a thermoplastic elastomer and an inorganic coloring agent.

2. The polypropylene-based resin extruded expanded particles according to claim 1, wherein the base resin contains, in a proportion of 64.5% by weight to 94.5% by weight with respect to 100% by weight of the base resin, the polypropylene-based resin having a branched structure.

3. The polypropylene-based resin extruded expanded particles according to claim 1 or 2, wherein the base resin contains, in a proportion of 5.0% by weight to 35.0% by weight with respect to 100% by weight of the base resin, the thermoplastic elastomer.

4. The polypropylene-based resin extruded expanded particles according to any one of claims 1 to 3, wherein the base resin contains, in a proportion of 0.5% by weight to 5.0% by weight with respect to 100% by weight of the base resin, the inorganic coloring agent.

5. The polypropylene-based resin extruded expanded particles according to any one of claims 1 to 4, wherein the inorganic coloring agent is at least one selected from the group consisting of carbon black, bole, ocher, green ocher, titanium oxide, cobalt blue, Prussian blue, and chromium oxide green.

6. The polypropylene-based resin extruded expanded particles according to any one of claims 1 to 5, wherein the thermoplastic elastomer is a polyolefin-based elastomer.

7. The polypropylene-based resin extruded expanded particles according to any one of claims 1 to 6, wherein the thermoplastic elastomer has a tensile elongation at break of 500% to 1000%.

8. The polypropylene-based resin extruded expanded particles according to any one of claims 1 to 7, wherein the thermoplastic elastomer has a melting point of 40°C to 110°C.

9. The polypropylene-based resin extruded expanded particles according to any one of claims 1 to 8, wherein the thermoplastic elastomer has a melt flow rate of 0.3 g/10 minutes to 10.0 g/10 minutes.

10. The polypropylene-based resin extruded expanded particles according to any one of claims 1 to 9, wherein the polypropylene-based resin extruded expanded particles have an open cell ratio of not more than 15%.

11. The polypropylene-based resin extruded expanded particles according to any one of claims 1 to 10, wherein the polypropylene-based resin extruded expanded particles have an average cell diameter of 100 $\mu$m to 500 $\mu$m.

12. The polypropylene-based resin extruded expanded particles according to any one of claims 1 to 11, wherein the polypropylene-based resin extruded expanded particles have a bulk density of not less than 60 g/L.

13. The polypropylene-based resin extruded expanded particles according to any one of claims 1 to 12, wherein a molding range of extruded expanded particles is not less than 0.02 MPa, the molding range being a range of a steam pressure during in-mold foam molding in which range, when the in-mold foam molding of the extruded expanded particles is carried out, it is possible to obtain a foamed molded product that satisfies the following:

(1) the extruded expanded particles are fused together at a fusion rate of not less than 80%;
(2) a gap between the extruded expanded particles is sufficiently filled;
(3) a surface of the foamed molded product is beautiful;
(4) the surface of the foamed molded product is not melted; and
(5) the foamed molded product does not shrink by not less than 5% with respect to the dimensions of a mold used for the in-mold foam molding, and the shape of the mold is transferred to the foamed molded product.

14. A polypropylene-based resin foamed molded product,

the polypropylene-based resin foamed molded product being a foamed molded product obtained by molding extruded expanded particles that include a base resin, the base resin containing, in a proportion of not less than 64.5% by weight with respect to 100% by weight of the base resin, a polypropylene-based resin having a branched structure, wherein
the extruded expanded particles has an open cell ratio of not more than 15.0%,
the foamed molded product has a density of 60 g/L to 300 g/L, and
the foamed molded product has a tensile elongation at break of not less than 10%.

15. A polypropylene-based resin foamed molded product obtained by molding polypropylene-based resin extruded expanded particles according to any one of claims 1 to 13.

**INTERNATIONAL SEARCH REPORT**

| International application No. |
| --- |
| **PCT/JP2022/007863** |

| A. | CLASSIFICATION OF SUBJECT MATTER |
| --- | --- |

*C08L 23/10*(2006.01)i; *C08J 9/16*(2006.01)i; *C08J 9/232*(2006.01)i; *C08K 3/01*(2018.01)i; *C08K 3/04*(2006.01)i; *B29C 48/04*(2019.01)i

FI:   C08J9/16 CES; C08J9/232; B29C48/04; C08L23/10; C08K3/04; C08K3/01

According to International Patent Classification (IPC) or to both national classification and IPC

| B. | FIELDS SEARCHED |
| --- | --- |

Minimum documentation searched (classification system followed by classification symbols)

C08J9/00-9/42; B29C44/00-44/60;B29C67/20; B29C48/00-48/96;C08L23/10; C08K3/01; C08K3/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | JP 2006-307177 A (JSP CORP) 09 November 2006 (2006-11-09)<br>claims 1, 3-4, paragraphs [0002], [0043], [0048]-[0049] | 1-15 |
| A | JP 2005-023302 A (JSP CORP) 27 January 2005 (2005-01-27)<br>claims 4, 6 | 1-15 |
| A | WO 2020/004429 A1 (KANEKA CORP) 02 January 2020 (2020-01-02)<br>claims 1, 5-6, paragraph [0090], table 2, examples 1-5 | 1-15 |
| A | WO 2018/079699 A1 (KYORAKU CO LTD) 03 May 2018 (2018-05-03)<br>claim 1, paragraph [0025] | 1-15 |
| A | JP 2018-076464 A (JSP CORP) 17 May 2018 (2018-05-17)<br>claims 1, 5-6 | 1-15 |
| P, A | WO 2021/131933 A1 (KANEKA CORP) 01 July 2021 (2021-07-01)<br>claims 1, 14-15 | 1-15 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **19 April 2022** | **17 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| | International application No. |
|---|---|
| | **PCT/JP2022/007863** |

| Patent document cited in search report | | | Publication date (day/month/year) | Patent family member(s) | | | Publication date (day/month/year) |
|---|---|---|---|---|---|---|---|
| JP | 2006-307177 | A | 09 November 2006 | US 2006/0223897 claims 1, 3-4 | A1 | | |
| | | | | EP 1707592 | A2 | | |
| | | | | KR 10-2006-0105475 | A | | |
| | | | | CN 1840567 | A | | |
| | | | | SG 126124 | A | | |
| | | | | SG 146651 | A | | |
| | | | | TW 200643077 | A | | |
| JP | 2005-023302 | A | 27 January 2005 | US 2004/0254254 claims 4, 6 | A1 | | |
| | | | | US 2007/0197673 | A1 | | |
| | | | | EP 1486531 | A1 | | |
| | | | | CN 1572823 | A | | |
| WO | 2020/004429 | A1 | 02 January 2020 | US 2021/0108016 claims | A1 | | |
| | | | | EP 3816209 | A1 | | |
| | | | | CN 112368322 | A | | |
| WO | 2018/079699 | A1 | 03 May 2018 | JP 2018-70795 | A | | |
| | | | | US 2019/0276615 claim 1 | A1 | | |
| | | | | JP 2018-83306 | A | | |
| | | | | JP 2018-141031 | A | | |
| | | | | EP 3533823 | A1 | | |
| | | | | CN 109890885 | A | | |
| | | | | KR 10-2019-0067841 | A | | |
| JP | 2018-076464 | A | 17 May 2018 | US 2019/0256680 claims 1, 5-6 | A1 | | |
| | | | | WO 2018/088390 | A1 | | |
| | | | | EP 3540003 | A1 | | |
| | | | | CN 109906242 | A | | |
| | | | | KR 10-2019-0077360 | A | | |
| WO | 2021/131933 | A1 | 01 July 2021 | (Family: none) | | | |

Form PCT/ISA/210 (patent family annex) (January 2015)

**REFERENCES CITED IN THE DESCRIPTION**

**Patent documents cited in the description**

- WO 2018016399 A
- WO 2020004429 A
- JP 2002542360 W
- JP 10237212 A